# EUROPÄISCHE PATENTSCHRIFT

(11) **EP 1 754 916 B1**
(45) Veröffentlichungstag und Bekanntmachung des Hinweises auf die Patenterteilung: **22.09.2010**
(21) Anmeldenummer: 06013773.4
(22) Anmeldetag: 04.07.2006
(51) Int. Cl.: F16K 31/00

(54) **Ventil mit Piezoelement**
Valve with piezoelectric element
Clapet avec un élément piézo-électrique

(30) Priorität: 16.08.2005 DE 102005038426
(43) Veröffentlichungstag der Anmeldung: 21.02.2007
(73) Patentinhaber: WILO AG, 44263 Dortmund (DE)
(72) Erfinder: Materne, Thomas, 59348 Lüdinghausen (DE)
(74) Vertreter: COHAUSZ DAWIDOWICZ HANNIG & SOZIEN

(56) Entgegenhaltungen:
- EP-A2- 0 903 522
- DE-A1- 3 608 494
- DE-A1- 10 120 709
- DE-A1- 10 203 260
- DE-A1- 19 649 225
- GB-A- 808 577
- GB-A- 2 376 795
- US-A- 4 492 891
- US-A- 4 494 727

## Beschreibung

Die Erfindung betrifft ein Ventil mit einem Ventilstellglied, auf das ein Piezoelement einwirkt.

Es ist bekannt, bei kleinen Ventilen das Ventilstellglied durch ein Piezoelement zu bewegen. Ferner sind Rückflussventile bekannt, die einen Rückfluss des durch das Ventil strömenden Mediums verhindern.

Aus der US-Patentschrift 4,494,727 ist ein Ventil mit einem Ventilstellglied bekannt, bei welchem ein Piezoelement bestehend aus piezoelektrischen Scheiben bei Bestromung derselben axial expandiert und auf einen Schaft eines Ventilelementes eine Kraft derart ausübt, dass das Ventilelement in der zum Zeitpunkt der Bestromung des Piezoelementes vorliegenden Position festgehalten wird. Im unbestromten Zustand des Piezoelementes liegt dagegen zwischen Schaft und Piezoelement ein Abstand von einigen wenigen Mikrometer vor.

Aus der deutschen Offenlegungsschrift DE 196 49 225 A1 ist ein Haltemechanismus offenbart, bei dem ein piezoeleketrisches Biegeelement einseitig in einem Lager eingespannt ist. Das Biegeelement verbiegt sich bei Anlegen an einer Spannung im Wesentlichen quer zur Bewegungsrichtung eines Schließkörpers. Der Schließkörper kann in einer vertikalen Position durch einen elektromagnetischen Aktor gehalten werden. Befindet sich der Schließkörper in einer von der Ventilschließstellung abgehobenen Position, kann sich das Biegeelement unter den Ventilteller bewegen, so dass es mit dem Schließkörper in Kontakt kommt, wenn dieser nicht durch den Aktor gehalten wird und durch eine Feder in Schließstellung gedrückt wird.

DE 3 608 494 offenbart ein Ventil gemäß dem Oberbegriff des Anspruchs 1.

Aufgabe der Erfindung ist es, ein Ventil zu schaffen, dessen Ventilstellglied sowohl in seiner geöffneten als auch in seiner geschlossenen Stellung auf konstruktiv einfache Weise sicher feststellbar und wieder lösbar ist.

Diese Aufgabe wird erfindungsgemäß dadurch gelöst, dass das Ventilstellglied durch das Piezoelement in der geschlossenen und in der geöffneten Stellung arretierbar ist, wobei das Piezoelement in seinem nicht bestromten Zustand das Ventilstellglied in beiden Stellungen arretiert halten kann, und wobei das Piezoelement einen Anschlag bildet oder einen Anschlag betätigt.

Da das Piezoelement das Ventilstellglied selber nicht bewegt, sondern nur einen Anschlag bildet oder einen Anschlag betätigt, können durch das Piezoelement bzw. das vom Piezoelement betätigte Teil verhältnismäßig große Kräfte aufgenommen werden, die erforderlich sind, um das Ventilstellglied festzustellen. Hierbei kann das Ventilstellglied durch das Piezoelement in der geschlossenen und in der geöffneten Stellung arretierbar sein.

Das Ventilstellglied wird vorzugsweise durch das durch das Ventil gesteuerte Medium bzw. durch die Flüssigkeit betrieben, wie dies bei einem Rückflussverhinderer erfolgt. Hierbei ist eine besonders einfache Konstruktion bei hoher Lebensdauer gegeben.

Bei aus dem Stand der Technik bekannten Rückflussverhinderern muss die Strömung stets gegen eine Feder anarbeiten, wenn das Ventilstellglied durch eine Feder belastet ist. Bei der erfindungsgemäßen Lösung wird dagegen das Ventilstellglied durch das Piezoelement in offener Stellung gegen den Druck der Feder festgehalten, so dass damit auch kein Differenzdruck entsteht. Eine solche Konstruktion führt zu besonders preiswerten und extrem kleinen verriegelbaren Ventilen insbesondere Rückflussverhinderern.

Besonders vorteilhaft ist ein solches hydraulisches Ventil bei Pumpen insbesondere Heizungspumpen im Heizungswasserbetrieb einsetzbar. Hierbei wird eine Kalibrierung der Pumpe im Pumpenbetrieb und eine sichere geschlossene Stellung im ausgeschalteten Zustand ermöglicht.

Vorzugsweise wird vorgeschlagen, dass das Piezoelement das federbeaufschlagte Ventilstellglied gegen Federkraft festhält. Hierdurch kann das Medium das Ventilstellglied gegen Federkraft öffnen oder schließen und in dieser Stellung kann dann das Ventilstellglied durch das Piezoelement oder durch ein Piezoelement bewegtes Teil festgehalten werden.

Somit kann das Ventilstellglied durch das Medium, insbesondere durch die Flüssigkeit, beaufschlagt sein, das/die vom Ventil gesteuert wird.

Vorzugsweise wird vorgeschlagen, dass am Piezoelement eine Mechanik insbesondere ein Getriebe angeordnet ist, durch die/das eine Vergrößerung der Bewegung des Piezoelementes erzeugbar ist.

Eine vorteilhafte Konstruktion ist gegeben, wenn das Ventilstellglied einen insbesondere tellerförmigen Vorsprung aufweist, hinter dem ein vom Piezoelement beweglicher Feststeller (Anschlag) zur Arretierung gelangt. Hierbei kann der Vorsprung und das Ventilstellglied auf oder an einem axial beweglichen Ventilstab befestigt sind.

Besonders vorteilhaft ist es, wenn es im Gehäuse einer Pumpe insbesondere im Einlass- und/oder Auslassstutzen angeordnet ist.

Ein Ausführungsbeispiel der Erfindung ist in der Zeichnung in axialen Schnitten dargestellt und wird im Folgenden näher beschrieben. Es zeigen
- Fig. 1: das Rückflussverhindererventil in arretierter geschlossener Stellung,
- Fig. 2: in frei beweglicher Stellung und
- Fig. 3: in geöffneter arretierter Stellung.

Das Ventil weist ein tellerförmiges Ventilstellglied 1 auf, das im geschlossenen Zustand an einem ringförmigen elastischen Ventilsitz 2 anliegt. Auf der dem Ventilsitz 2 abgewandten Seite ist am Ventilstellglied 1 ein Ventilstab 3 senkrecht zum Ventilteller und koaxial befestigt. Am Ventilstab 3 ist ferner ein tellerförmiger Vorsprung 4 koaxial im Abstand zum Ventilstellglied 1 befestigt und der Ventilstab 3 ist in einem Radialgleitlager 5 gelagert.

Zwischen dem Gleitlager 5 und dem tellerförmigen Vorsprung 4 ist ein Federelement 6 insbesondere in Form einer Schraubendruckfeder angeordnet, die das Ventilstellglied 1 gegen den Ventilsitz 2 drückt.

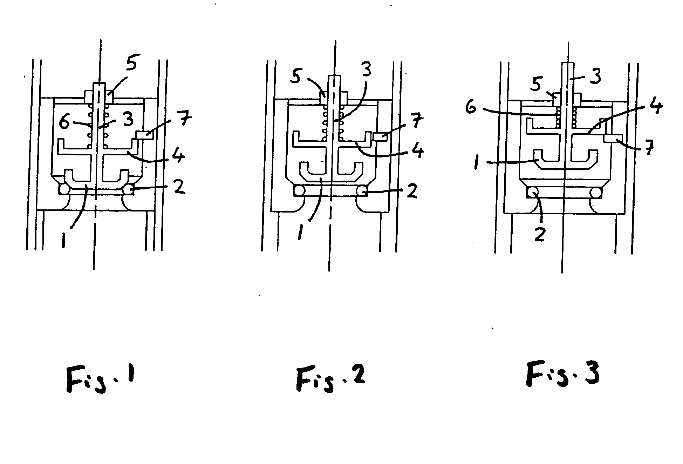

Seitlich neben dem tellerförmigen Vorsprung 4 ist ein Feststeller 7 radial beweglich angeordnet, der in geschlossener Stellung des Ventilstellglieds auf einer Seite des Vorsprungs 4 (s. Fig. 1) und in geöffneter Stellung des Ventilstellglieds auf der anderen Seite des Vorsprungs 4 (Fig. 3) anliegt bzw. den Vorsprung hintergreift. Damit kann das Ventilstellglied 1 sowohl in geöffneter Stellung als auch in geschlossener Stellung arretiert werden. Hierbei wird das Ventilstellglied 1 durch das das Ventil durchströmende Medium insbesondere eine Flüssigkeit gegen den Federdruck in die geöffnete Stellung bewegt, um dann in dieser Stellung vom Feststeller 7 arretiert zu werden.

Der Feststeller 7 ist insbesondere bei sehr kleinen Ventilen direkt selber ein Piezoelement oder aber der Feststeller 7 wird von einem Piezoelement radial bewegt. Alternativ kann am Piezoelement eine Mechanik insbesondere ein Getriebe angeordnet sein, durch das die Bewegung des Piezoelementes vergrößert wird. Auch können statt einem Piezoelement mehrere angeordnet werden, um das Ventilstellglied in einer Stellung zu arretieren.

Das Rückflussventil mit Piezoelement bildet somit einen Rückflussverhinderer, positioniert auf der Rückseite, der mittels eines Piezoelementes offen bzw. geschlossen gehalten wird.

Nicht bestromt liegt das Piezoelement auf einer Kante des Ventilstellglieds des Rückflussverhinderers an und verhindert somit ein Öffnen/Schließen des Ventils. Durch Bestromung des Piezoelementes bewegt es sich fort von dem Ventilstellglied und ermöglicht damit ein Öffnen/Schließen. Geöffnet wird das Ventil über den erzeugten Pumpendruck. Im ausgeschalteten Zustand der Pumpe ist das Ventil durch die fehlende Druckdifferenz aufgrund der Rückstellkraft der Feder im Ventil geschlossen.

Im ausgeschalteten Zustand der Pumpe ist das Ventil aufgrund der Rückstellkraft der Feder im Ventil geschlossen. Das Piezoelement verhindert ein Öffnen des Ventils und damit auch eine Zirkulation des Mediums. Durch das Einschalten der Pumpe wird ein Druck erzeugt, der auch vor dem Ventil ansteht. Hinter dem Ventil wirkt weiterhin der Systemdruck. Wird das Piezoelement bestromt, verformt es sich und löst die Verrasterung mit dem Ventil. Anschließend öffnet sich das Ventil aufgrund der Druckdifferenz. Nach dem Öffnen des Ventils, wird die Bestromung des Piezoelementes aufgehoben, womit es sich wieder in das Ventil bewegt, einrastet und ein Schließen des Ventils verhindert.

Durch das Ausschalten der Pumpe wirken vor und hinter dem Ventil die gleichen Drücke. Eine Bestromung des Piezoelementes bewirkt ein Wandern aus dem Ventil, wodurch sich das Ventil aufgrund der Rückstellkraft der Feder schließt. Nachdem die Bestromung des Piezos aufgehoben wurde, rastet es wieder im Ventil ein. Ein Öffnen des Ventils wird verhindert.

Da ein Piezoelement sich nur um einen sehr kleinen Betrag verformt, ist es ggf. erforderlich, ein Element zur Wegvergrößerung an das Piezoelement anzubringen. Dadurch ist eine größere Auflage der Piezoelementeinheit an dem Ventilstellglied gegeben.

## Patentansprüche

1. Ventil mit einem Ventilstellglied (1), auf das ein Piezoelement (7) einwirkt, wobei dass das Ventilstellglied (1) durch das Piezoelement (7) in der geschlossenen und in der geöffneten Stellung arretierbar ist, wobei das Piezoelement in seinem nicht bestromten Zustand das Ventilstellglied in beiden Stellungen arretiert halten kann, **dadurch gekennzeichnet, dass** das Piezoelement (7) einen Anschlag bildet oder einen Anschlag betätigt.

2. Ventil nach Anspruch 1, **dadurch gekennzeichnet, dass** das Piezoelement (7) das federbeaufschlagte Ventilstellglied (1) gegen Federkraft (6) festhält.

3. Ventil nach einem der vorherigen Ansprüche, **dadurch gekennzeichnet, dass** das Ventilstellglied (1) durch das Medium insbesondere die Flüssigkeit beaufschlagbar ist, das/die vom Ventil gesteuert wird.

4. Ventil nach einem der vorherigen Ansprüche, **dadurch gekennzeichnet, dass** am Piezoelement (7) eine Mechanik insbesondere ein Getriebe angeordnet ist, durch die/das eine Vergrößerung der Bewegung des Piezoelementes (7) erzeugbar ist.

5. Ventil nach einem der vorherigen Ansprüche, **dadurch gekennzeichnet, dass** es ein Rückflussverhinderer ist.

6. Ventil nach einem der vorherigen Ansprüche, **dadurch gekennzeichnet, dass** das Ventilstellglied (1) einen insbesondere tellerförmigen Vorsprung (4) aufweist, hinter dem ein vom Piezoelement beweglicher Feststeller (7) zur Arretierung gelangt.

7. Ventil nach Anspruch 6, **dadurch gekennzeichnet, dass** der Vorsprung (4) und das Ventilstellglied (1) auf oder an einem axial beweglichen Ventilstab (3) befestigt sind.

8. Pumpe, insbesondere Heizungspumpe, mit einem Gehäuse, **dadurch gekennzeichnet, dass** in dem Gehäuse, insbesondere in einem Einlass- und/oder Auslassstutzen des Gehäuses, ein Ventil nach einem der Ansprüche 1 bis 7 angeordnet ist.

## Claims

1. Valve with a valve actuator (1) on which a piezoelectric element (7) acts, the valve actuator (1) being detainable in the closed position and in the open position by means of the piezoelectric element (7), while the piezoelectric element, in its dead state, can keep the valve actuator detained in either of the two positions, **characterized in that** the piezoelectric element (7) forms a stop or actuates a stop.

2. Valve according to Claim 1, **characterized in that** the piezoelectric element (7) retains the spring-loaded valve actuator (1) counter to spring force (6).

3. Valve according to one of the preceding claims, **characterized in that** the valve actuator (1) can be acted upon by the medium, in particular the liquid, which is controlled by the valve.

4. Valve according to one of the preceding claims, **characterized in that** the piezoelectric element (7) has arranged on it a mechanism, in particular a gear, by means of which an increase in the movement of piezoelectric element (7) can be generated.

5. Valve according to one of the preceding claims, **characterized in that** it is a non-return valve.

6. Valve according to one of the preceding claims, **characterized in that** the valve actuator (1) has an, in particular, plate-shaped projection (4), behind which a lock (7) movable by the piezoelectric element comes for detention.

7. Valve according to Claim 6, **characterized in that** the projection (4) and the valve actuator (1) are fastened on or to an axially movable valve rod (3).

8. Pump, in particular a heating pump, with a casing, **characterized in that** a valve according to one of Claims 1 to 7 is arranged in the casing, in particular in inlet and/or outlet connection piece of the casing.

## Revendications

1. Clapet avec un organe de commande de clapet (1), sur lequel agit un élément piézoélectrique (7), l'organe de commande de clapet (1) pouvant être bloqué par l'élément piézoélectrique (7) dans la position fermée et dans la position ouverte, l'élément piézoélectrique, dans son état non alimenté en courant, pouvant bloquer l'organe de commande de clapet dans les deux positions,
**caractérisé en ce que** l'élément piézoélectrique (7) forme une butée ou actionne une butée.

2. Clapet selon la revendication 1, **caractérisé en ce que** l'élément piézoélectrique (7) fixe l'organe de commande de clapet (1) sollicité par ressort à l'encontre de la force du ressort (6).

3. Clapet selon l'une quelconque des revendications précédentes, **caractérisé en ce que** l'organe de commande de clapet (1) peut être sollicité par le fluide, notamment le liquide, qui est commandé par le clapet.

4. Clapet selon l'une quelconque des revendications précédentes, **caractérisé en ce qu'**un mécanisme, notamment un engrenage, est disposé sur l'élément piézoélectrique (7), lequel permet de produire une augmentation du mouvement de l'élément piézoélectrique (7).

5. Clapet selon l'une quelconque des revendications précédentes, **caractérisé en ce qu'**il s'agit d'un dispositif anti-reflux.

6. Clapet selon l'une quelconque des revendications précédentes, **caractérisé en ce que** l'organe de commande de clapet (1) présente une saillie (4) notamment en forme de plateau, derrière laquelle vient s'arrêter un dispositif de fixation (7) déplaçable par l'élément piézoélectrique.

7. Clapet selon la revendication 6, **caractérisé en ce que** la saillie (4) et l'organe de commande de clapet (1) sont fixés sur ou contre une tige de clapet (3) déplaçable axialement.

8. Pompe, en particulier pompe de chauffage, comprenant un boîtier, **caractérisée en ce que** dans le boîtier, notamment dans une tubulure d'entrée et/ou de sortie du boîtier, est disposé un clapet selon l'une quelconque des revendications 1 à 7.
